# EUROPEAN PATENT APPLICATION

(11) **EP 2 098 985 A2**
(43) Date of publication of application: **09.09.2009**
(21) Application number: 09003050.3
(22) Date of filing: 03.03.2009
(51) Int. Cl.: G06Q 20/00

(54) **Secure financial reader architecture**

(30) Priority: 03.03.2008 US 33422 P; 02.03.2009 US 396297
(71) Applicant: Broadcom Corporation, Irvine CA 92617 (US)
(72) Inventor: Tato, Charles, Menlo Park, CA 94025 (US); Youngblood, Gregory, Portola Valley, CA 94028-7445 (US); Kiang, Rex, Union City, CA 94587-1539 (US); Wallace, Joseph, Gilbert, AZ 85295 (US); Buer, Mark, Gilbert, AZ 85296 (US)
(74) Representative: Jehle, Volker Armin

(57) **Abstract**

Methods and systems are provided for secure transaction processing. A secure processor may include an integrated wireless card reader and optionally a secure memory. When a request for payment information associated with an on-line transaction is received, the integrated wireless card reader reads data from the payment card. The secure processor may retrieve a set of transaction identifiers from the payment card issuer or optionally a trusted third party. The secure processor transmits one of the retrieve transaction identifiers to the on-line merchant instead of payment card data. The on-line merchant communicates the transaction identifier to the payment card issuer or the trusted third party for validation. Alternatively, the secure processor may encrypt the read payment card data utilizing the payment card number as the shared secret required by the cryptographic algorithm. The secure processor then forwards the encrypted payment card data to the on-line merchant.

## Description

### CROSS-REFERENCE TO RELATED APPLICATIONS

This application claims the benefit of U.S. Provisional Application No. 61/033,422, filed March 3, 2008, which is incorporated herein by reference in its entirety.

### FIELD OF THE INVENTION

This application relates generally to data communications and more specifically to information security.

### BACKGROUND OF THE INVENTION

The use of online merchant sites for purchasing goods and services has increased dramatically. Upon selection of the good or service to be purchased, these sites typically take the user to an online payment screen. The online payment screen requires a user to enter his or her credit card number and optionally a verification ID to complete the transaction. Many users are hesitant to enter this financial information over the Internet for fear that the data may be intercepted and used by a malicious third party.

To aid the consumer, many prior art computing systems automatically fill the payment fields with the actual credit card number. This data can then be captured directly at the computing device if the platform has certain security vulnerabilities (e.g., spyware). Additionally, many computing devices store this sensitive information in memory in the clear (e.g., unencrypted). Thus, an intruder gaining access to the computing device can easily obtain the credit card data necessary to perform unauthorized transactions.

Many banks and financial institutions are also issuing contactless credit and debit cards. These contactless cards transfer card data to a reader automatically without requiring a user to enter data or physically insert or swipe the card at a reading device. This increased convenience also comes at the price of increased vulnerability. A well-placed rogue reader may be able to read card data from a card coming into proximity to a legitimate reader.

What is therefore needed are systems and methods for a secure financial reader architecture.
According to an aspect, a method for secure transaction processing in a secure processor is provided, comprising:
receiving a request for payment information associated with an on-line transaction with an online merchant system;
reading, in a wireless card reader integrated within the secure processor, data from a payment card issued by a financial institution;
storing the payment card data in a secure memory within the secure processor;
retrieving a set of transaction identifiers associated with the payment card; and
communicating a transaction identifier from the set of transaction identifiers as the payment information via a secure communications channel with the online merchant system.
Advantageously, the method further comprises:
storing the set of transaction identifiers in the secure memory.
Advantageously, retrieving the set of transaction identifiers comprises:
retrieving the set of transaction identifiers from a system associated with the financial institution that issued the payment card.
Advantageously, retrieving the set of transaction identifiers comprises:
retrieving the set of transaction identifiers from a trusted third party system.
Advantageously, retrieving the set of transaction identifiers comprises:
retrieving a one time passcode from a one time passcode generator within the secure processor; and
using the one time passcode as the transaction identifier.
Advantageously, the method further comprises:
generating the one time passcode based on the read payment card data.
Advantageously, the method further comprises:
generating the one time passcode using a cryptographic algorithm, wherein a shared secret used by the cryptographic algorithm is a number associated with the payment card.
Advantageously, the method further comprises:
generating the one time passcode by combining a number associated with the payment card with variable data.
Advantageously, the variable data is a transaction time.
Advantageously, the variable data is a counter in the secure processor.
According to an aspect, a method for secure transaction processing is provided, comprising:
(a) receiving a request from a secure processor for a set of transaction identifiers associated with a payment card;
(b) communicating the set of transaction identifiers to the secure processor;
(c) receiving a first transaction identifier from an online merchant, wherein the first transaction identifier is associated with an online payment transaction;
(d) comparing the received first transaction identifier against the set of transaction identifiers;
(e) determining whether to approve the online payment transaction if the received transaction identifier matches a transaction identifier in the set of transaction identifiers; and
(f) returning an indication of a decision on the online payment transaction to the online merchant.
Advantageously, the method further comprises:
after step (d), if the received transaction identifier matches the transaction identifier in the set of transaction identifiers,
associating the received transaction identifier to payment card data; and
communicating the payment card data over a secure communications channel to a system associated with an institution that issued the payment card.
According to an aspect, a tangible computer-readable medium is provided having stored thereon, computer-executable instructions that, if executed by a computing device, cause the computing device to perform a method comprising:
receiving a request from a secure processor for a set of transaction identifiers associated with a payment card;
communicating the set of transaction identifiers to the secure processor;
receiving a first transaction identifier from an online merchant, wherein the first transaction identifier is associated with an online payment transaction;
comparing the received first transaction identifier against the set of transaction identifiers;
determining whether to approve the online payment transaction if the received transaction identifier matches a transaction identifier in the set of transaction identifiers; and
returning an indication of a decision on the online payment transaction to the online merchant.
According to an aspect, a method for secure transaction processing in a secure processor comprises:
receiving a request for payment information associated with an on-line transaction with an online merchant system;
reading, in a wireless card reader integrated within the secure processor, data from a payment card issued by a financial institution;
encrypting the payment card data using a cryptographic algorithm, wherein a shared secret used by the cryptographic algorithm is a number associated with the payment card data; and
communicating the encrypted payment card data via a secure communications channel to the online merchant system.
According to a further aspect, a method for secure transaction processing comprises:
(a) receiving encrypted payment card data from an online merchant;
(b) decrypting the encrypted payment card data using a cryptographic algorithm, wherein a shared secret used by the cryptographic algorithm is a number associated with the payment card data;
(c) determining whether to approve the online payment transaction; and
(d) returning an indication of a decision on the online payment transaction to the online merchant.
Advantageously, the method further comprises:
after step (b),
communicating the decrypted payment card data over a secure communications channel to a system associated with an institution that issued the payment card.
According to an aspect, a tangible computer-readable medium is provided having stored thereon, computer-executable instructions that, if executed by a computing device, cause the computing device to perform a method comprising:
receiving encrypted payment card data from an online merchant;
decrypting the encrypted payment card data using a cryptographic algorithm, wherein a shared secret used by the cryptographic algorithm is a number associated with the payment card data;
determining whether to approve the online payment transaction; and
returning an indication of a decision on the online payment transaction to the online merchant.
According to a further aspect, a method for secure transaction processing comprises:
receiving, in a secure processor, a request for payment information associated with an on-line transaction with an online merchant system;
reading, in a wireless card reader integrated within the secure processor, data from a payment card issued by a financial institution;
storing the payment card data in a secure memory within the secure processor;
generating a one time passcode in a one time passcode generator within the secure processor as an identifier for the online transaction; and
communicating the online transaction identifier via a secure communications channel with the online merchant system.
Advantageously, the method further comprises:
receiving, at a server, an online payment verification request, wherein the verification request includes the online transaction identifier;
generating a validation one time passcode in a one time passcode generator in the server, wherein the one time passcode generator in the server is synchronized with the one time passcode generator in the secure processor;
validating the one time passcode in the verification request against the validation one time passcode; and
communicating a result of the validation to the online merchant system.

### BRIEF DESCRIPTION OF THE DRAWINGS/FIGURES

The accompanying drawings, which are incorporated herein and form a part of the specification, illustrate the present invention and, together with the description, further serve to explain the principles of the invention and to enable a person skilled in the pertinent art to make and use the invention.

FIG. 1 is an exemplary operating environment for performing transactions using a secure financial reader architecture, according to embodiments of the present invention.

FIG. 2 depicts a flowchart of a method for processing a financial transaction using a secure financial reader architecture, according to embodiments of the present invention.

FIG. 3 depicts an exemplary operating environment for use of a unique transaction identifier or one time usage code validated by the issuing bank, according to embodiments of the present invention.

FIG. 4 depicts a flowchart of a method for processing a financial transaction using a secure financial reader architecture, according to embodiments of the present invention.

FIG. 5 depicts an exemplary operating environment for use of a unique transaction identifier or one time usage code validated by a trusted third party, according to embodiments of the present invention.

FIG. 6 depicts a flowchart of an alternative method for processing a financial transaction using a secure financial reader architecture, according to embodiments of the present invention.

FIG. 7 depicts an exemplary operating environment for use of encrypted card data decrypted by the issuing bank, according to embodiments of the present invention.

FIG. 8 depicts an exemplary operating environment for use of encrypted card data decrypted by a trusted third party, according to embodiments of the present invention.

FIG. 9 illustrates a block diagram of a computer processing unit that can be used to implement the entities shown in FIG. 1, according to an embodiment of the present invention.

The present invention will now be described with reference to the accompanying drawings. In the drawings, like reference numbers can indicate identical or functionally similar elements. Additionally, the left-most digit(s) of a reference number may identify the drawing in which the reference number first appears.

### DETAILED DESCRIPTION OF THE INVENTION

### 1.0 Architecture

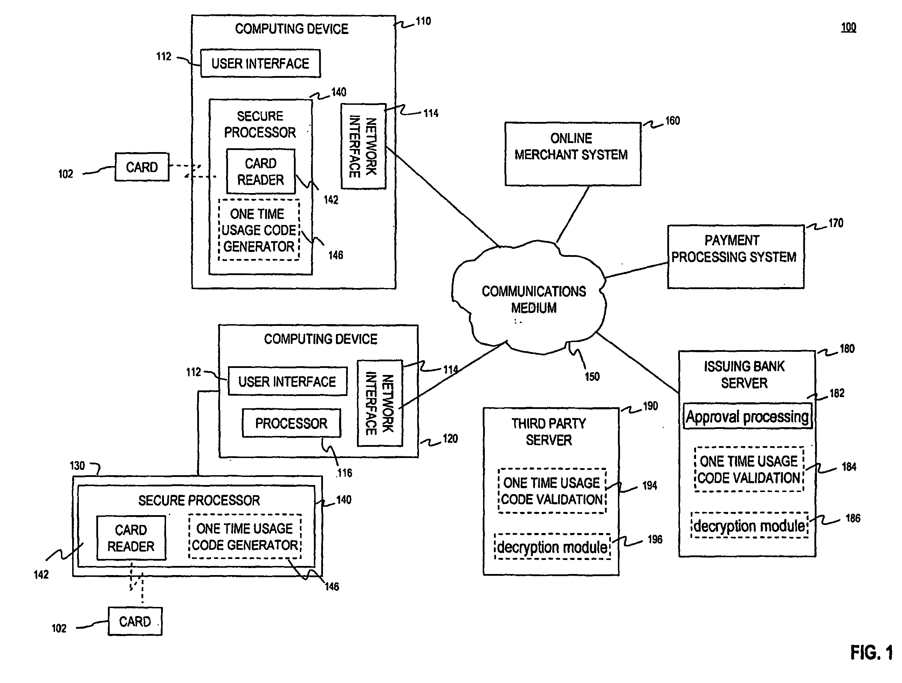

FIG. 1 is an exemplary operating environment 100 for performing transactions using a secure financial reader architecture, according to embodiments of the present invention. Exemplary operating environment 100 includes a plurality of cards 102, computing device 110 having integrated secure processor 140, a computing device 120 coupled to an external secure processing device 130, a communications medium 150, an online merchant server 160, a payment processor system 170, and an issuing bank server 180. Exemplary operating environment 100 may also include a third party financial processing server 190. Note that environment may include one or more computing devices 110 or one or more computing devices 120.

Card 102 is a portable payment device such as a credit card or debit card which is issued by a bank or financial institution (referred to herein as a "bank" for ease of description). In an embodiment, card 102 is a contactless card. That is, card 102 can be read when within a certain proximity to a contactless reader.

Computing device 110 includes a user interface 112, a network interface 114, and an integrated secure processor 140. Computing device 120 includes a user interface 112, a network interface 114, and a processor 116. Unlike computing device 110, computing device 120 does not have an integrated secure processor 140. Both computing device 110 and computing device 120 may include an interface for coupling with an external secure processing device 130 (interface not shown). Computing device 110 or 120 is any device with a processor including, but not limited to, a personal computer, a laptop, a wireless phone, a personal digital assistant (PDA), or a personal entertainment device.

User interface 112 is configured to enable a user to interact with computing device 110 or 120 and to request access to remote applications and services. User interface 112 may include one or more output devices including, but not limited to, a display, indication lights, and a speaker. In addition, user interface 112 may include one or more input devices including, but not limited to, a keypad, button, pointing device, touch screen, audio device, soft-key-based menu. For example, authentication data such as a log-in/password pair may be entered via user interface 112.

Network interface 114 is configured to enable computing device 110 or 120 to communicate with network 150. In an embodiment, network interface 114 is a wired interface. In an additional or alternative embodiment, network interface 114 is a wireless interface.

Secure processing device 130 is a stand-alone device which may be coupled to computing device 110 or 120 to provide secure processing capabilities. Secure processing device 130 may be a dongle (e.g., a USB-based dongle) or any other device which can be coupled to a computing device. Secure processing device 130 includes a secure processor 140.

Secure processor 140 provides the required cryptographic operations to encrypt, decrypt, and/or authenticate data that is sent or received by the secure processor. Secure processor 140 includes a contactless card reader 142. Secure processor 140 is configured to securely communicate with online merchant server/applications 160 via a browser or similar application, with issuing bank server 180, and/or with a third party financial server 190.

In an embodiment, secure processor 140 includes a one-time usage code generation module 146. One-time usage code generation module 146 is configured to generate a single use transaction identifier or one time usage code.
Secure processor 140 may also include a processor, memory, and/or dedicated cryptographic hardware. In addition, secure processor 140 may incorporate other security mechanisms. In an embodiment, secure processor 140 is designed to conform to a security specification relating to, for example, FIPS or TPM.

A security boundary associated with secure processor 140 may be established, for example, using hardware and/or cryptographic techniques. Hardware techniques for providing a security boundary may include, for example, placing components within a single integrated circuit. In addition, one or more integrated circuits may be protected by a physical structure using tamper evident and/or tamper resistant techniques such as epoxy encapsulation. Encryption techniques for establishing a security boundary may include, for example, encrypting sensitive information before it leaves secure processor 140. For this purpose, secure processor 140 may use one or more cryptographic processors and store the associated encryption/decryption keys in a secure memory internal to secure processor 140.

Contactless card reader 142 is configured to read data (e.g., card number, verification number, etc.) from a card 102. Card reader 142 resides within the security boundary associated with secure processor 140. For example, card reader 142 may be physically located on the same chip as secure processor 140. Data received from card 102 is therefore securely maintained within secure processor 140. Certain sensitive card data is therefore never exposed outside the security chip or security boundary within which secure processor 140 is implemented. As a result, data from the card 102 remains secured, even if computing device 110 or 120 is compromised.

In an embodiment, computing device 110 or 120 (or secure processor 140) directly accesses online merchant system 160, issuing bank server 180, or third party server 190 via a communications medium 150. Similarly, online merchant system 160 accesses payment processing system 170 via communications medium 150. Payment processing system 170 may access issuing bank server 180 and/or third party server 190 directly or via communications medium 150. Communications medium 150 may be a public data communications network such as the Internet, a private data communications network, the Public Switched Telephone Network (PSTN), a wireless communications network, or any combination thereof. The interface between the computing devices 110, 120 and communications medium 150 can be a wireless interface or a wired interface.

Online merchant system 160 hosts one or more applications offering goods or services which a user may purchase using a credit or debit card. Online merchant system 160 may comprise hardware and/or software configured to provide the application and payment interface.

Issuing bank server 180 includes approval processing module 182, optional one time usage code validation module 184, and optional decryption module 186. Approval processing module 182 is configured to perform a standard transaction approval process. One time usage code validation module 184 is configured to validate the usage code and/or transaction identifier received from the secure processor. In an embodiment, validation module 184 performs validation against a stored set of transaction codes. In an alternate embodiment, validation module 184 includes an algorithm synchronized to the algorithm in the secure processor 140 used to generate the code. For example, the algorithm verifies that the received code matches a value generated by the validation module 184. These embodiments are described in further detail in Section 2.0 below.

Decryption module 186 is configured to decrypt received encrypted card data. In an embodiment, if encryption is performed using a symmetric key algorithm, decryption is performed using a shared secret such as the card number or transaction identifier, or usage code. In an additional or alternative embodiment, if encryption is performed using an asymmetric key algorithm, decryption is performed using the private key of the issuing bank.

An issuing bank may generate an asymmetric (public/private) key pair to use in secure communications with the issuing bank. For public/private key credentials, the public key is retrieved by an entity engaging in secure communication with the issuing bank. The private key is stored securely in an issuing bank system.

Third party server 190 includes an optional one time usage code validation module 194 and optional decryption module 196. One time usage code validation module 194 is configured to validate the usage code and/or transaction identifier received from a secure processor. In an embodiment, validation module 194 performs validation against a stored set of transaction codes. In an alternate embodiment, validation module 194 includes an algorithm synchronized to the algorithm in the secure processor 140 used to generate the code. For example, the algorithm verifies that the received code matches a value generated by the validation module 194. These embodiments are described in further detail in Section 2.0 below.

Decryption module 196 is configured to decrypt received encrypted card data. In an embodiment, decryption is performed using the card number or transaction identifier (usage code) as the shared secret. In an alternative embodiment, decryption is performed using the private key of the third party server.

Payment processing system 170 is configured to handle processing of payments for the online merchant and/or issuing bank. In an embodiment, payment processing system 170 acts as a router for payment messages between an online merchant and a trusted third party or issuing bank. In an alternate embodiment, payment processing system 170 performs partial processing. In this embodiment, payment processing system 170 may also includes an optional one time usage code validation module and an optional decryption module.

Note that trusted third party or payment processing system may also include an approval processing module.

### 2.0 Methods

In the methods described herein, a secure processor (e.g., included in a security chip embedded in a computing device or in an external device) is used as a reader for credit or debit card data. The credit or debit card data, after being read by the secure processor, is never exposed outside the security boundary of the secure processor in clear text form. For example, the data is never exposed to a network, a processor or memory in the computing device, or any other untrusted element (e.g., web site) in clear text form.

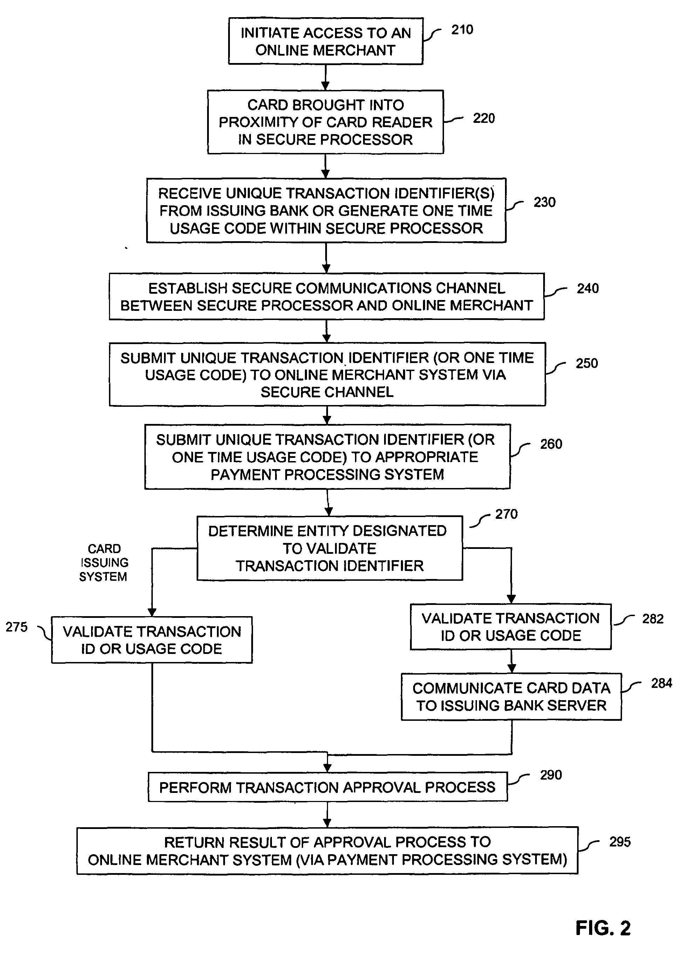

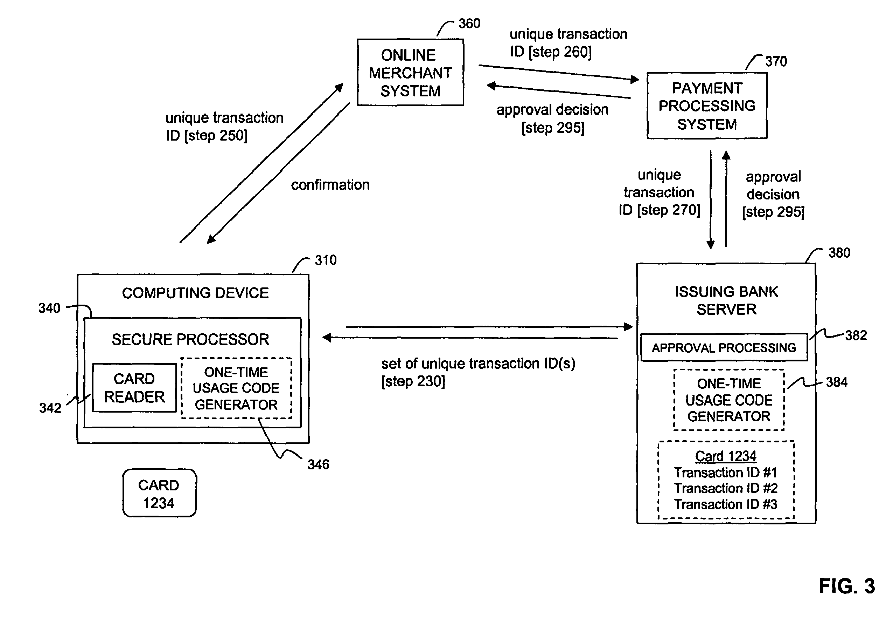

FIG. 2 depicts a flowchart 200 of a method for processing a financial transaction using a secure financial reader architecture, according to embodiments of the present invention. Flowchart 200 is described with continued reference to the exemplary operating environments depicted in FIGs. 1 and 3. However, flowchart 200 is not limited to those embodiments. Note that some of the steps in flowchart 200 do not necessarily have to occur in the order shown.

In step 210, access to an online merchant system such as merchant system 360 in FIG. 3 is initiated. For example, a user may use a standard web browser to access a webpage through which a user can gain access to the online merchant. During interaction with the online merchant system, online payment via a credit or debit card may be requested by the merchant system. For example, the online merchant system may direct a user to an online payment page.

In step 220, a card such as a credit or debit card is brought into proximity of card reader 342 in secure processor 340 and card reader 342 reads data from the card. The read card data is maintained in a secure memory within the secure processor. For example, in FIG. 3, computing device 210 includes secure processor 340 having an integrated card reader 342.

In step 230, a set of unique transaction identifiers is received from the issuing bank. Alternatively, one or more one time usage codes may be generated by a one-time usage code generator within secure processor 340. A one time usage code may be considered a type of single use transaction identifier. The use of a unique transaction identifier or one time usage code ensures that each transaction is unique. Therefore, if a transaction identifier or one time usage code is stolen or compromised, it can only be used once, limiting exposure.

In an embodiment, one or more unique transaction identifiers are retrieved from issuing bank server 380. In this embodiment, a secure communications connection is established between secure processor 340 and issuing bank server 380. For example, a secure SSL or TLS tunnel may be set up between the security boundary of secure processor 340 and the issuing bank server 380. In this embodiment, secure processor 340 transmits credentials (e.g., user name and password) to issuing bank server 380. Secure processor 340 may also transmit card data. In embodiments, the card data is encrypted using either a shared secret between secure processor 340 and third party server 390 or a public/private key pair. Issuing bank server 380 validates the received credentials. If the credentials are valid and secure processor 340 is authorized for the requested transaction, issuing bank server 380 returns one or more transaction identifiers to be used for financial transactions involving the issuing bank. The transaction identifiers may be further restricted to use with a particular card number. Note that this step may be performed prior to initiation of a payment process by the user with an online merchant system. Secure processor 340 stores the retrieved one or more transaction identifiers within the security boundary of secure processor 340.

In a further additional or alternative embodiment, secure processor 340 generates one or more one time usage codes in a code generation module 346. In this embodiment, security processor 340 may transform the card data read in the previous step into a one time usage code. The one time usage code can be generated using the card number read by reader 342 combined with the time of the transaction (or a counter) using a cryptographic algorithm such as the Advanced Encryption Standard (AES), SHA256 or OATH such that the shared secret required by the algorithm is the card number. In this embodiment, code generation module 346 must be synchronized with a module that authenticates the generated code during the financial transaction. In the embodiment of FIG. 3, issuing bank server 380 includes a synchronized code generation module for authenticating the generated usage code.

In step 240, a secure communications channel (e.g., a secure tunnel) is established between secure processor 340 and online merchant system 360. For example, a secure SSL or TLS tunnel may be set up between the security boundary of secure processor 340 and online merchant system. Note that step 240 may occur earlier in flowchart 200.

In step 250, the unique transaction identifier (or one time usage code) for the transaction is submitted to online merchant system 360 via the secure communications channel. The unique transaction identifier (or one time usage code) is submitted to the merchant system instead of the actual credit or debit card number. The unique transaction identifier (or one time usage code) is used throughout the normal credit processing transaction in place of the card data.

In step 260, the online merchant system submits the unique transaction identifier (or one time usage code) and/or transaction details (e.g., charge amount) to the appropriate payment processing system 370.

In step 270, the payment processing system 370 determines the entity designated to validate the transaction identifier (or one time usage code). If the card issuer makes the determination, the unique transaction identifier is communicated to issuing bank server 380 and operation proceeds to step 275. If the payment processing system 370 makes the determination, operation proceeds to step 282.

In step 275, the issuing bank server 380 validates the transaction identifier (or one time usage code) received from the online merchant system (via payment processing system 370). Note that the validation of the transaction identifier (or one time usage code) may be integrated into the approval process of step 292. For example, if a unique transaction identifier is received, issuing bank server 380 compares the received transaction identifier against a set of transaction identifiers for the card and/or issuing bank. If the one time usage code is generated by a module within the secure processor 340, issuing bank server 380 validates the received one time usage code against one or more usage codes generated by a synchronized code generation module 384 for the card issuer. If the received transaction identifier is successfully validated, operation proceeds to step 292. If the received transaction identifier is not successfully validated, a denial result is returned to the online merchant system 360 directly or via payment processor 370.

In step 282, payment processing system 370 validates the transaction identifier or the one time usage code. In this scenario, the payment processing system 370 receives transaction identifier information or information necessary to derive a one time usage code from the issuing bank. This information is retrieved during or at any time prior to step 282. Steps 282 and 284 are not depicted in FIG. 3.

In step 282, payment processing system 370 validates a received transaction identifier by comparing the received transaction identifier against a set of valid transaction identifiers associated with the card data or the card issuer. If a one time usage code is used, the one time usage code generated by a module within the secure processor 340 is validated against one or more usage codes generated by a synchronized code generation module within or accessed by the payment processing system. If the received transaction identifier is successfully validated, operation proceeds to step 284. If the received transaction identifier is not successfully validated, a denial result is returned to the online merchant system 360.

In step 284, payment processing system 370 communicates transaction information to issuing bank server 380. Operation then proceeds to step 290. Note that in an embodiment, the communication path between payment processing system 370 and issuing bank server 380 is secure.

In step 290, issuing bank server 380 performs the transaction approval process for the transaction. Note that the payment processing system or trusted third party may also perform the approval process.

In step 295, the issuing bank server 380 returns the result of the approval process to the online merchant system 360 which then communicates the result (e.g., via a confirmation) to the computing device.

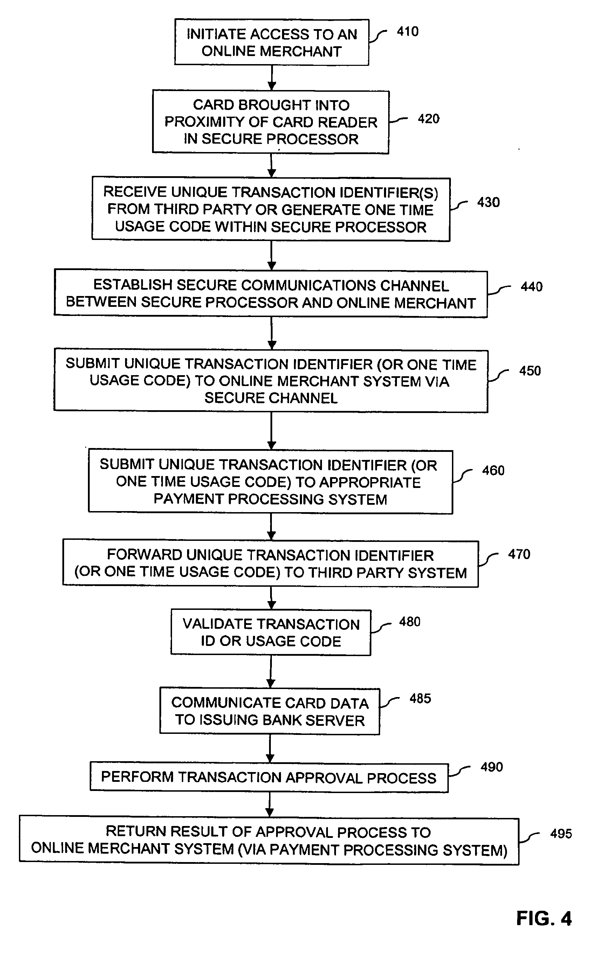

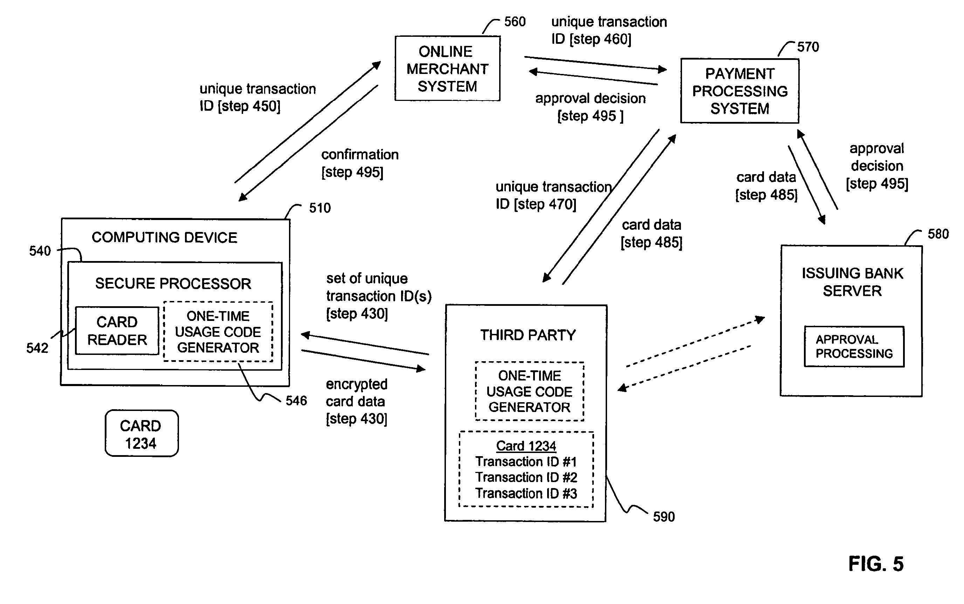

FIG. 4 depicts a flowchart 400 of a method for processing a financial transaction using a secure financial reader architecture, according to embodiments of the present invention. Flowchart 400 is described with continued reference to the exemplary operating environments depicted in FIGs. 1 and 5. However, flowchart 400 is not limited to those embodiments. Note that some of the steps in flowchart 400 do not necessarily have to occur in the order shown.

In step 410, access to an online merchant system such as merchant system 560 in FIG. 5 is initiated. For example, a user may use a standard web browser to access a webpage through which a user can gain access to the online merchant. During interaction with the online merchant system, online payment via a credit or debit card may be requested by the merchant. For example, the online merchant system may direct a user to an online payment page.

In step 420, a card such as a credit or debit card is brought into proximity of card reader 542 in secure processor 540 and card reader 542 reads data from the card. For example, in FIG. 5, computing device 510 includes secure processor 540 having an integrated card reader 542.

In step 430, a set of unique transaction identifiers is received from a third party system. Alternatively, a one time usage code is generated within the secure processor 540. The use of a unique transaction identifier or one time usage code ensures that each transaction is unique. Therefore, if a transaction identifier or one time usage code is stolen or compromised, it can only be used once, limiting exposure.

In this step, one or more unique transaction identifiers are retrieved from third party server 590. In this embodiment, a secure communications connection is established between secure processor 540 and third party server 590. For example, a secure SSL or TLS tunnel may be set up between the security boundary of secure processor 540 and the third party server 590. In this embodiment, secure processor 540 transmits credentials (e.g., user name and password) to third party server 590. Secure processor 540 may also transmit card data. In embodiments, the card data is encrypted using either a shared secret between secure processor 540 and third party server 590 or a public/private key pair. Third party server 590 validates the received credentials. If the credentials are valid and secure processor 540 is authorized for the requested transaction, third party server 590 returns one or more transaction identifiers to be used for financial transactions involving the card. Note that this step may be performed prior to initiation of a payment process by the user with an online merchant system. Secure processor 540 stores the retrieved one or more transaction identifiers within the security boundary of secure processor 540.

Alternatively, a one time usage code is generated within the secure processor 540. Generation of a one time usage code is described above in the discussion of FIG. 2. In this embodiment, third party server 590 includes a synchronized code generation module for authenticating the generated usage code.

In step 440, a secure communications channel (e.g., secure tunnel) is established between secure processor 540 and online merchant system 560. For example, a secure SSL or TLS tunnel may be set up between the security boundary of secure processor 540 and online merchant system. Note that step 440 may occur earlier in flowchart 400.

In step 450, the unique transaction identifier (or one time usage code) is submitted to the online merchant system 560 via the secure communications channel. The unique transaction identifier (or one time usage code) is submitted to the merchant system instead of the actual credit or debit card number. The unique transaction identifier (or one time usage code) is then used throughout the normal credit processing transaction in place of the card data.

In step 460, the online merchant submits the unique transaction identifier (or one time usage code) and/or transaction details (e.g., charge amount) to the appropriate payment processing system 570.

In step 470, payment processing system 570 communicates the transaction identifier (or one time usage code) and/or transaction information (e.g., charge amount) to a trusted third party server 590.

In step 480, the third party server 590 validates the transaction identifier (or one time usage code) received from the online merchant system (via payment processing system 570). For example, if a unique transaction identifier is received, trusted third party server 590 compares the received transaction identifier against a set of valid transaction identifiers associated with the card or the card issuer. If a one time usage code is used, the one time usage code generated by a module within the secure processor 540 is validated against one or more usage codes generated by a synchronized generation module within or accessed by the trusted third party. If the received transaction identifier is successfully validated, operation proceeds to step 485. If the received transaction identifier is not successfully validated, a denial result is returned to the online merchant system 560 directly or via payment processing system 570. In this step, the trusted third party also associates the received transaction identifier with card data.

In step 485, trusted third party server 590 communicates the card data and/or transaction information (e.g., charge amount) to issuing bank system 580 directly or via payment processing system 570.

In step 490, issuing bank server 580 performs the transaction approval process for the transaction using the card data and transaction information. Note that the payment processing system or trusted third party may also perform the approval process.

In step 495, the issuing bank server 580 returns the result of the transaction approval process to the online merchant system 560 via the payment processing system 570 and/or the third party server 590. The online merchant system 560 then communicates the result (e.g., via a confirmation) to the computing device.

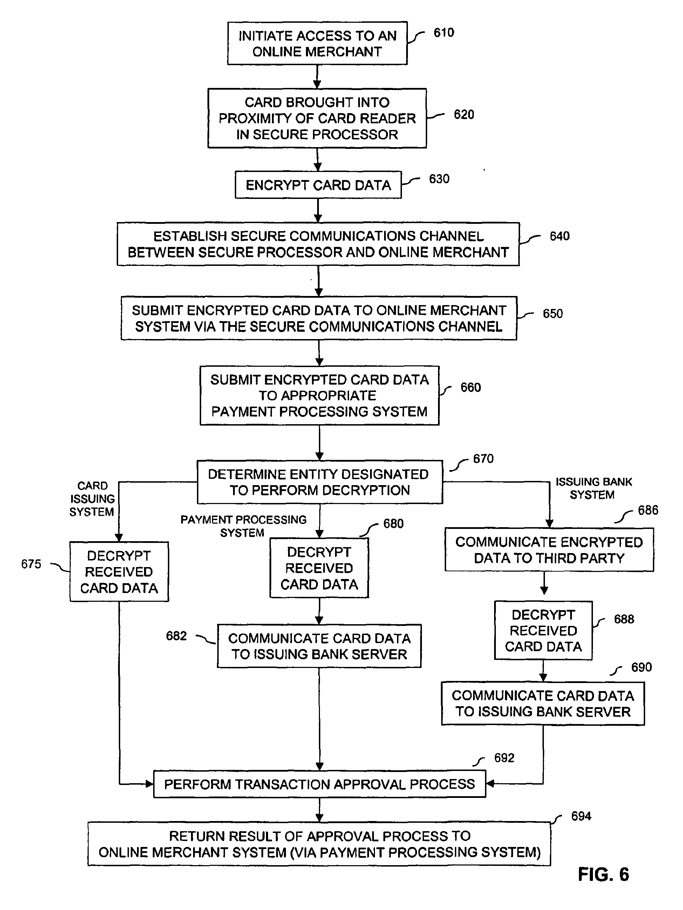

FIG. 6 depicts a flowchart 600 of a method for processing a financial transaction using a secure financial reader architecture, according to embodiments of the present invention. Flowchart 600 is described with continued reference to the exemplary operating environments depicted in FIGs. 1, 7, and 8. However, flowchart 600 is not limited to those embodiments. Note that some of the steps in flowchart 600 do not necessarily have to occur in the order shown.

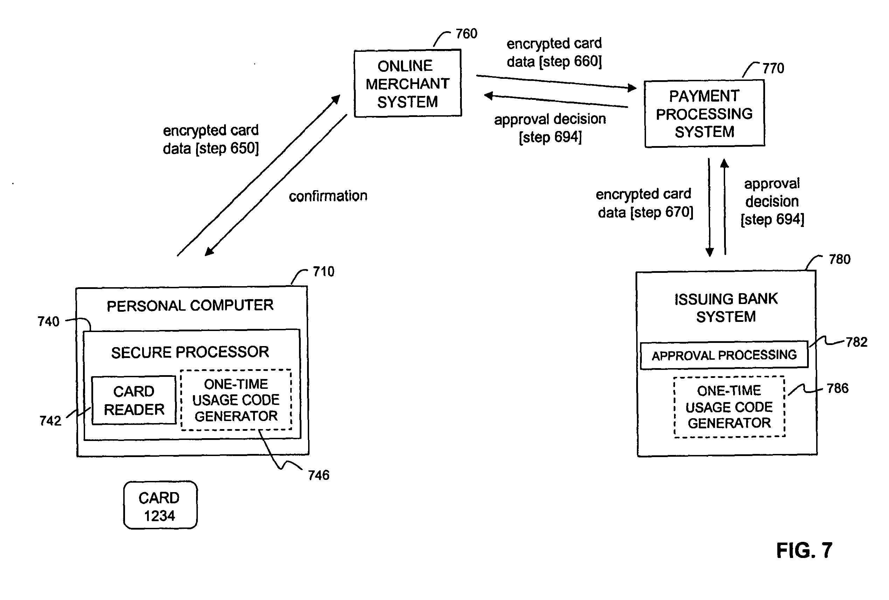

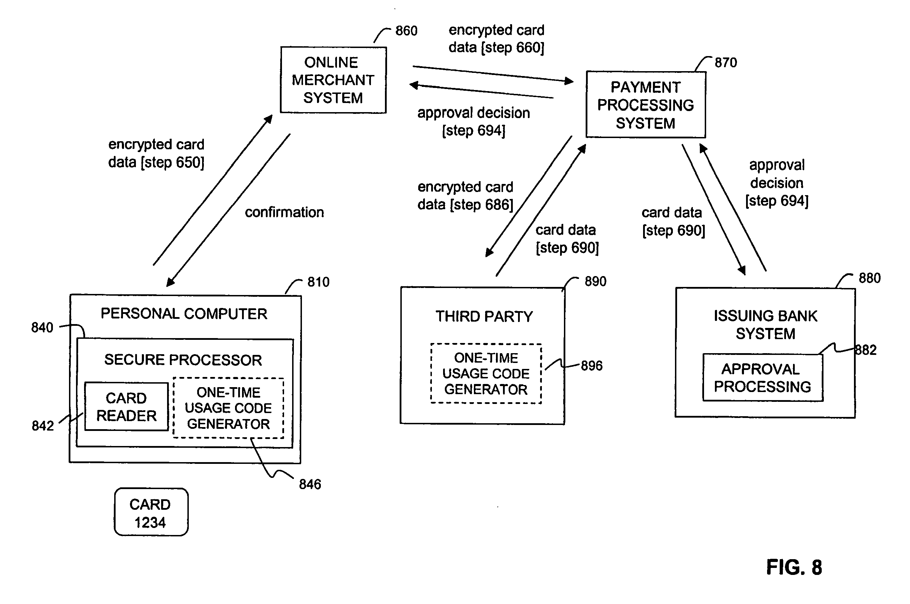

In step 610, access to an online merchant system such as merchant system 760 in FIG. 7 or merchant system 860 in FIG. 8 is initiated. For example, a user may use a standard web browser to access a webpage through which a user can gain access to the online merchant. During interaction with the online merchant system, online payment via a credit or debit card may be requested by the merchant. For example, the online merchant system may direct a user to an online payment page.

In step 620, a card such as a credit or debit card is brought into proximity of card reader 742/842 in secure processor 740/840 and card reader 742/842 reads data from the card.

In step 630, the card data is encrypted by secure processor 740/840. In an embodiment, card data is encrypted using a shared secret. The credit or debit card number (or a portion of the number or data) or a retrieved or generated transaction identifier (or one time code) may be used as the shared secret. Note that if the credit or debit card number is used as the "shared secret," no separate enrollment process for the secure processor is required.

In an additional or alternative embodiment, the card data is encrypted using the public key of the issuing bank, payment processor, or trusted third party. In this embodiment, the secure processor 740/840 downloads or accesses the public key for the entity designated to perform the decryption. The secure processor 740/840 may access the public key when a transaction is initiated or may access and store the public key a priori.

FIG. 7 depicts an embodiment in which the issuing bank server performs the decryption and FIG. 8 depicts an embodiment in which the third party performs the decryption.

In step 640, a secure communications channel (e.g., a secure tunnel) is established between secure processor 740/840 and online merchant system 760/860. For example, a secure SSL or TLS tunnel may be set up between the security boundary of secure processor 740/840 and online merchant system. Note that step 640 may occur earlier in flowchart 600.

In step 650, the encrypted card data is submitted to the online merchant system via the secure communications channel.

In step 660, the online merchant submits the encrypted card data to the appropriate payment processing system 770/870.

In step 670, payment processing system 770/870 determines the entity designated to perform decryption and/or transaction approval processing. If the card issuer 780/880 is designated, operation proceeds to step 675. If the payment processing system 770/870 is designated, operation proceeds to step 680. If the third party is designated, operation proceeds to step 686.

In step 675, issuing bank server 780 decrypts the received card data. This alternative is depicted in FIG. 7. If the card data is encrypted using the card number, server 780 uses the card number (stored at issuing bank server) to decrypt the card data. If the card data is encrypted using a transaction identifier (or one time usage code), server 780 uses the transaction identifier (or one time usage code) stored at (or generated by) the server to decrypt the card data. If the card data is encrypted using the public key of the bank, server 780 uses the private key of the bank to decrypt the received card data. Operation then proceeds to step 692.

In step 680, payment processing system decrypts the received card data. If the card data is encrypted using the card number, payment processing system uses the card number (retrieved from the issuing bank server) to decrypt the card data. If the card data is encrypted using a transaction identifier (or one time usage code), payment processing system uses the transaction identifier (or one time usage code) stored at (or generated by) the server to decrypt the card data. If the card data is encrypted using the public key of the bank, payment processing system uses the private key of the bank to decrypt the received card data. Operation then proceeds to step 692.

In step 682, payment processing system communicates card data to issuing bank server. Operation then proceeds to step 692. Note that in an embodiment, the communication path between payment processing system and issuing bank server is secure.

Steps 686 through 690 are depicted in FIG. 8.

In step 686, payment processing system 870 communicates encrypted data to trusted third party server 890.

In step 688, trusted third party server 890 decrypts the received card data. If the card data is encrypted using the card number, payment processing system uses the card number (retrieved from the issuing bank server) to decrypt the card data. If the card data is encrypted using a transaction identifier (or one time usage code), trusted third party system uses the transaction identifier (or one time usage code) stored at (or generated by) the server to decrypt the card data. If the card data is encrypted using the public key of the bank, trusted third party system uses the private key of the bank to decrypt the received card data.

In step 690, trusted third party server 890 communicates card data and/or transaction information to issuing bank server 880 directly or via payment processing system 870.

In step 692, issuing bank server 880 performs the transaction approval process for the transaction. Note that the trusted third party may also perform the approval process.

In step 694, the issuing bank server returns the result of the transaction approval process to the online merchant which then communicates the result (e.g., via a confirmation) to the computing device.

### 4.0 Exemplary General Purpose Computer System

Embodiments of the present invention, or portions thereof, can be implemented in hardware, firmware, software, and/or combinations thereof.

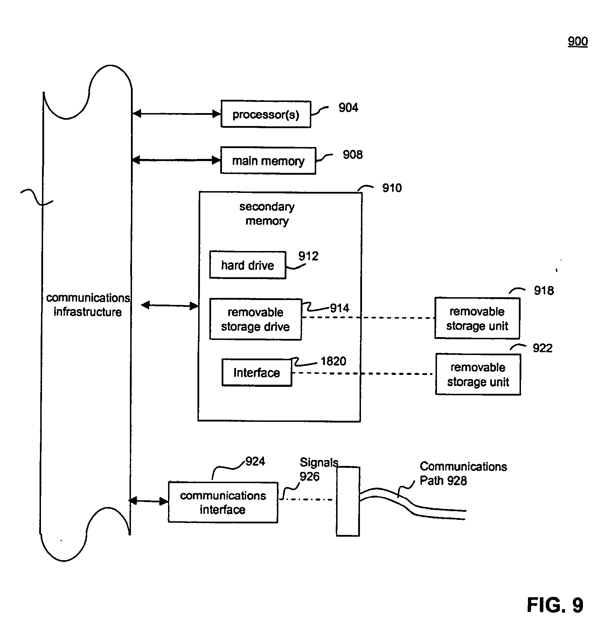

The following description of a general purpose computer system is provided for completeness. Embodiments of the present invention may be implemented in the environment of a computer system or other processing system. An example of such a computer system 900 is shown in FIG. 9. The computer system 900 includes one or more processors, such as processor 904. Processor 904 can be a special purpose or a general purpose digital signal processor. The processor 904 is connected to a communication infrastructure 906 (for example, a bus or network). Various software implementations are described in terms of this exemplary computer system. After reading this description, it will become apparent to a person skilled in the relevant art how to implement the invention using other computer systems and/or computer architectures.

Computer system 900 also includes a main memory 905, preferably random access memory (RAM), and may also include a secondary memory 910. The secondary memory 910 may include, for example, a hard disk drive 912, and/or a RAID array 916, and/or a removable storage drive 914, representing a floppy disk drive, a magnetic tape drive, an optical disk drive, etc. The removable storage drive 914 reads from and/or writes to a removable storage unit 918 in a well known manner. Removable storage unit 918, represents a floppy disk, magnetic tape, optical disk, etc. As will be appreciated, the removable storage unit 918 includes a computer usable storage medium having stored therein computer software and/or data.

In alternative implementations, secondary memory 910 may include other similar means for allowing computer programs or other instructions to be loaded into computer system 900. Such means may include, for example, a removable storage unit 922 and an interface 920. Examples of such means may include a program cartridge and cartridge interface (such as that found in video game devices), a removable memory chip (such as an EPROM, or PROM) and associated socket, and other removable storage units 922 and interfaces 920 which allow software and data to be transferred from the removable storage unit 922 to computer system 900.

Computer system 900 may also include a communications interface 7024. Communications interface 924 allows software and data to be transferred between computer system 900 and external devices. Examples of communications interface 924 may include a modem, a network interface (such as an Ethernet card), a communications port, a PCMCIA slot and card, etc. Communications path 926 may be implemented using wire or cable, fiber optics, a phone line, a cellular phone link, an RF link and other communications channels.

The terms "computer program medium" and "computer usable medium" are used herein to generally refer to media such as removable storage drive 914, a hard disk installed in hard disk drive 912. These computer program products are means for providing software to computer system 900.

Computer programs (also called computer control logic) are stored in main memory 908 and/or secondary memory 910. Computer programs may also be received via communications interface 924. Such computer programs, when executed, enable the computer system 900 to implement the present invention as discussed herein. In particular, the computer programs, when executed, enable the processor 904 to implement the processes of the present invention. Where the invention is implemented using software, the software may be stored in a computer program product and loaded into computer system 900 using raid array 916, removable storage drive 914, hard drive 912 or communications interface 924.

### 3.0 Conclusion

While various embodiments of the present invention have been described above, it should be understood that they have been presented by way of example only, and not limitation. It will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the following claims and their equivalents.

## Claims

1. A method for secure transaction processing in a secure processor, comprising:
receiving a request for payment information associated with an on-line transaction with an online merchant system;
reading, in a wireless card reader integrated within the secure processor, data from a payment card issued by a financial institution;
storing the payment card data in a secure memory within the secure processor;
retrieving a set of transaction identifiers associated with the payment card; and
communicating a transaction identifier from the set of transaction identifiers as the payment information via a secure communications channel with the online merchant system.

2. The method of claim 1, further comprising:
storing the set of transaction identifiers in the secure memory.

3. The method of claim 1, wherein retrieving the set of transaction identifiers comprises:
retrieving the set of transaction identifiers from a system associated with the financial institution that issued the payment card.

4. A method for secure transaction processing, comprising:
(a) receiving a request from a secure processor for a set of transaction identifiers associated with a payment card;
(b) communicating the set of transaction identifiers to the secure processor;
(c) receiving a first transaction identifier from an online merchant, wherein the first transaction identifier is associated with an online payment transaction;
(d) comparing the received first transaction identifier against the set of transaction identifiers;
(e) determining whether to approve the online payment transaction if the received transaction identifier matches a transaction identifier in the set of transaction identifiers; and
(f) returning an indication of a decision on the online payment transaction to the online merchant.

5. The method of claim 4, further comprising:
after step (d), if the received transaction identifier matches the transaction identifier in the set of transaction identifiers,
associating the received transaction identifier to payment card data; and
communicating the payment card data over a secure communications channel to a system associated with an institution that issued the payment card.

6. A tangible computer-readable medium having stored thereon, computer-executable instructions that, if executed by a computing device, cause the computing device to perform a method comprising:
receiving a request from a secure processor for a set of transaction identifiers associated with a payment card;
communicating the set of transaction identifiers to the secure processor;
receiving a first transaction identifier from an online merchant, wherein the first transaction identifier is associated with an online payment transaction;
comparing the received first transaction identifier against the set of transaction identifiers;
determining whether to approve the online payment transaction if the received transaction identifier matches a transaction identifier in the set of transaction identifiers; and
returning an indication of a decision on the online payment transaction to the online merchant.

7. A method for secure transaction processing in a secure processor, comprising:
receiving a request for payment information associated with an on-line transaction with an online merchant system;
reading, in a wireless card reader integrated within the secure processor, data from a payment card issued by a financial institution;
encrypting the payment card data using a cryptographic algorithm, wherein a shared secret used by the cryptographic algorithm is a number associated with the payment card data; and
communicating the encrypted payment card data via a secure communications channel to the online merchant system.

8. A method for secure transaction processing, comprising:
(a) receiving encrypted payment card data from an online merchant;
(b) decrypting the encrypted payment card data using a cryptographic algorithm, wherein a shared secret used by the cryptographic algorithm is a number associated with the payment card data;
(c) determining whether to approve the online payment transaction; and
(d) returning an indication of a decision on the online payment transaction to the online merchant.

9. A tangible computer-readable medium having stored thereon, computer-executable instructions that, if executed by a computing device, cause the computing device to perform a method comprising:
receiving encrypted payment card data from an online merchant;
decrypting the encrypted payment card data using a cryptographic algorithm, wherein a shared secret used by the cryptographic algorithm is a number associated with the payment card data;
determining whether to approve the online payment transaction; and
returning an indication of a decision on the online payment transaction to the online merchant.

10. A method for secure transaction processing, comprising:
receiving, in a secure processor, a request for payment information associated with an on-line transaction with an online merchant system;
reading, in a wireless card reader integrated within the secure processor, data from a payment card issued by a financial institution;
storing the payment card data in a secure memory within the secure processor;
generating a one time passcode in a one time passcode generator within the secure processor as an identifier for the online transaction; and
communicating the online transaction identifier via a secure communications channel with the online merchant system.
